# EUROPEAN PATENT APPLICATION

(11) **EP 1 318 680 A2**
(43) Date of publication of application: **11.06.2003**
(21) Application number: 02258459.3
(22) Date of filing: 06.12.2002
(51) Int. Cl.: H04N 7/24

(54) **Method and apparatus for interfacing various audiovisual devices with a digital data network**

(30) Priority: 07.12.2001 US 10403
(71) Applicant: Yazaki North America, Inc., Canton, Michigan 48187 (US)
(72) Inventor: Bower, Gregory S., Ann Arbor, MI 48103 (US); Paul, David J., Canton, MI 48188 (US); Sinotte, Sean C., Canton, MI 48187 (GB)
(74) Representative: Cheyne, John Robert Alexander Mackenzie

(57) **Abstract**

A system and method for interfacing legacy analog audiovisual signal sources with a digital data network 123 allows distribution over that network of audiovisual programming to a number of output devices. Preferably, the digital data network 123 is a fibre optic network installed inside a vehicle 120. In one particular application, the interface is between the digital data network 123 and an optical disc drive 221 that outputs an analog signal 222, 223. The analog output 222, 223 is preferred, in part, to support copyright protection measures. An additional interface for a digital video camera 246 allows a signal from the camera to be carried on the in-vehicle digital data network 123.

## Description

### FIELD OF THE INVENTION

The present invention relates to the use of audio and audiovisual data signals, particularly in a digital data network installed on-board a vehicle. More particularly, the present invention relates to the field of interfacing various analog and digital media devices with an in-vehicle digital network, particularly a fiber optic network.

### BACKGROUND OF THE INVENTION

With the growth of the Internet, cable television, video-on-demand services, satellite radio and the like, the demand for entertainment and informational media is constantly increasing. Consumers want a wide variety of audio and audiovisual programming to select from and want the programming they desire to be available whenever and wherever convenient. In particular, entertainment systems integrated into vehicles, particularly family cars, are becoming increasingly popular.

As used herein and in the appended claims, the term audiovisual programming is used to broadly encompass audio programming, such as music or voice recordings or transmissions; video programming, such as still photographs or images; and audiovisual programming, moving pictures with an associated soundtrack, such as movies, television shows, etc.

To respond to these demands, many devices and formats for storing, reproducing and transmitting audio and audiovisual programming have been developed over the years. Initially, analog signals were used for the transmission of audio and audiovisual programming. Most radio and television broadcasts still use analog signals.

However, along with the demand that audio and audiovisual programming be widely and readily available, consumers also demand that such programming be of as high a quality as possible. Consequently, for many years now, there has been a shift away from the analog realm to the digital where greater amounts of audiovisual information can be transmitted to provide enhanced sound and picture quality.

While increasing signal quality, the digital realm also presents several challenges. First, the continuing use of legacy analog devices presents, and will continue to present, problems in an increasingly digital world. This is particularly true where digital systems or networks are used as the basis for an entertainment system. Additionally, illegal copying of audio and audiovisual programming, while retaining quality in the copy, is much easier to accomplish in the digital world than it was the analog. This presents grave concerns for the owners of rights in audiovisual programming. Accordingly, many measures are being developed and implemented to prevent successful copying of digital audiovisual programming and to support legitimate copyrights in such material.

Consequently, there is a constant need in the art for means and methods of better integrating analog devices with digital data systems and networks, particularly digital data networks dedicated to carrying entertainment and informational media. This need is particularly acute with in-vehicle digital data networks. There is a further need in the art for means and methods of supporting measures for copyright protection in digital media.

### SUMMARY OF THE INVENTION

The present invention meets the above-described needs and others. Specifically, the present invention provides, among other things, an interface for connecting an analog audiovisual signal source with a digital data network. In one preferred embodiment, the interface preferably includes at least one paired analog audio signal input and analog video signal input; a video decoder connected to the video signal input for decoding and digitizing an incoming video signal; an analog-to-digital converter connected to the audio signal input for digitizing an incoming audio signal; a compressor for receiving output from the video decoder and the analog-to-digital converter and combining and compressing the digitized video signal and the digitized audio signal into a single audiovisual data stream; and a network interface for receiving output from the compressor and transmitting the audiovisual data stream on the digital data network.

Preferably, the digital data network is a fiber-optic network. In such a case, the network interface can convert the audiovisual data stream into an optical data stream before transmitting the optical data stream on the digital data network. In another preferred embodiment, the digital data network is installed in a vehicle and provides audiovisual programming to audiovisual output devices connected to the network throughout the vehicle. Preferably, the compressor uses an MPEG compression.

The interface of the present invention may also be configured to handle other inputs. For example, the interface may include a second paired analog audio signal input and analog video signal input; a second video decoder connected to the second video signal input for decoding and digitizing a second video signal; a second analog-to-digital converter connected to the second audio signal input for digitizing a second audio signal; and a second compressor for receiving output from the second video decoder and the second analog-to-digital converter and combining and compressing the digitized second video signal and the digitized second audio signal into a second audiovisual data stream. The network interface can then receive output from the first and second compressors, packetize the first and second audiovisual data streams and transmit the first and second audiovisual data streams on the digital data network.

In another preferred embodiment, the present invention may be used to interface an optical disc drive to a digital data network. Such an embodiment may include an optical disc drive for reproducing audio or audiovisual data from an optical disc, wherein the optical disc drive outputs an analog video signal; a digital data network for transmitting digital audiovisual data streams; and an interface for interfacing the output of the optical disc drive with the digital data network. The interface preferably includes a video decoder connected to the output of the optical disc drive for receiving, decoding and digitizing the analog video signal; a compressor for receiving output from the video decoder and a digital audio signal from the optical disc drive, the compressor combining and compressing the digitized video signal and the audio signal into a single audiovisual data stream; and a network interface for receiving output from the compressor and transmitting the audiovisual data stream on the digital data network.

A micro-controller may receive user commands for the optical disc drive via the data network and control the optical disc drive in accordance with the user commands. In this way the user has remote control over the optical disc drive.

In still another embodiment, the present invention may be a system for transmitting audiovisual data from a digital video camera, i.e., for interfacing the digital video camera with a digital data network. This system preferably includes an IEEE 1394 port for receiving an IEEE 1394 bus connected to a digital video camera such that a digital audiovisual signal transmitted via the bus from the camera is received through the port; a digital data network for transmitting digital audiovisual data streams; and an interface for interfacing the IEEE 1394 port with the digital data network. The interface preferably provides a video decoder connected to the IEEE 1394 port for receiving and decoding the digital audiovisual signal; an encoder for receiving output from the video decoder, the encoder re-encoding the audiovisual signal at a lower bit rate to produce an encoded audiovisual data stream; and a network interface for receiving output from the compressor and transmitting the audiovisual data stream on the digital data network.

A micro-controller for the system can receive user commands for the digital video camera via the data network. The micro-controller then controls the digital video camera in accordance with the user commands thereby giving the user remote control over the audiovisual programming coming from the camera. The interface for the digital video camera may also be combined with the interface for the optical disc drive and/or an interface for a generic analog audiovisual signal source under the principles of the present invention.

The present invention further encompasses the methods of making and operating the systems and interfaces described above. For example, the present invention may encompass a method of interfacing an analog audiovisual signal source with a digital data network, the method comprising: decoding and digitizing an incoming analog video signal; digitizing an incoming analog audio signal; combining and compressing the digitized video signal and the digitized audio signal into a single audiovisual data stream; and transmitting the audiovisual data stream on the digital data network.

The present invention further encompasses a method of reproducing and transmitting audiovisual data from an optical disc by reproducing audio or audiovisual data from an optical disc with an optical disc drive, wherein the optical disc drive outputs an analog video signal and a digital audio signal; decoding and digitizing the analog video signal; combining and compressing the decoded, digitized video signal and the digital audio signal to form a single audiovisual data stream; and transmitting the audiovisual data stream on a digital data network.

Finally, the present invention may encompass a method of transmitting audiovisual data from a digital video camera by connecting an IEEE 1394 bus between the digital video camera and an IEEE 1394 port of an interface unit such that a digital audiovisual signal transmitted via the bus from the camera is received through the port; decoding the digital audiovisual signal; and re-encoding the audiovisual signal at a lower bit rate to produce an encoded audiovisual data stream; and transmitting the audiovisual data stream over a digital data network.

Additional advantages and novel features of the invention will be set forth in the description which follows or may be learned by those skilled in the art through reading these materials or practicing the invention. The advantages of the invention may be achieved through the means recited in the attached claims.

### BRIEF DESCRIPTION OF THE DRAWINGS

The accompanying drawings illustrate preferred embodiments of the present invention and are a part of the specification. Together with the following description, the drawings demonstrate and explain the principles of the present invention.

Fig. 1 is an illustration of an in-vehicle data network used to interface with a variety of analog audiovisual signal sources and to service a variety of audiovisual output devices according to the present invention.

Fig. 2 is an illustration of a first embodiment of the present invention for interfacing analog audiovisual signal sources with an in-vehicle digital data network.

Fig. 3 is a more detailed illustration of the system illustrated in Fig. 2.

Fig. 4 is an illustration of a particular application of the system of Fig. 2 in which an optical disk drive, providing an analog output signal, is interfaced with a digital data network.

Fig. 5 is a more detailed illustration of the system illustrated in Fig. 4.

Fig. 6 is an illustration of a system according to the present invention for interfacing a digital video camera with an in-vehicle digital data network.

Fig. 7 is a more detailed illustration of the system of Fig. 6 integrated with the system of Figs 4 and 5.

Throughout the drawings, identical elements are designated by identical reference numbers.

### DETAILED DESCRIPTION OF THE PREFERRED EMBODIMENTS

The present invention provides a system for interfacing analog audiovisual signal sources with a digital data network that distributes the audiovisual programming to a number of output devices. In a preferred embodiment, the digital data network is a fiber optic network installed inside a vehicle. In one particular application, the present invention provides an interface between the digital data network and an optical disc drive that outputs an analog video signal. The analog output supports copyright protection measures. The present invention also includes an interface for a digital video camera to the in-vehicle digital data network.

Using the drawings, the preferred embodiments of the present invention will now be explained.

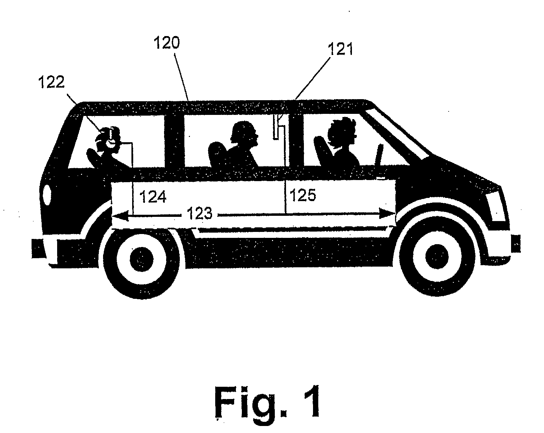

Vehicles represent a particular environment in which audiovisual programming, for entertainment or information, is frequently desired. Consequently, as shown in Fig. 1, the present invention contemplates a vehicle (120) that includes an on-board digital data network (123). As will be understood, the term "vehicle" as used herein, and in the appended claims, encompasses all forms of motorized transportation, including, but not limited to, cars, vans, trucks, buses, sport-utility vehicles, airplanes, boats and the like.

Preferably, the on-board digital data network (123) is a fiber optic network. Generally, fiber optic networks are robust and capable of carrying large amounts of digital data.

With the provision of the data network (123) in the vehicle, audiovisual programming data can be communicated by the network (123) to various parts of the vehicle (120) for use by vehicle passengers. For example, one passenger may be watching a television, video monitor or display device (121) that is connected (125) to the data network (123) and receives an appropriate video or audiovisual signal therefrom. Additionally, another passenger may be listening to an audio program through a set of headphones (122) that are connected (124) to the network (123) and receive an audio signal therefrom.

The network (123) can carry digital data in any format. Consequently, the network (123) may be carrying, for example, a DVD audiovisual data stream; and/or an MPEG-1, MPEG-2 or MPEG-4 audiovisual data stream; and/or a Motion JPEG or Video CD (VCD) audiovisual data stream, and/or a CD audio data stream, and/or an MP3 audio data stream, etc. By packetizing data, the network can also carry multiple data streams simultaneously. Obviously, the network will have to carry data in a format useable by the various output devices, or those output devices will have to be connected to the network with an interface that translates the incoming audiovisual data stream into a form useable by that output device.

As used herein and in the appended claims, the term "audiovisual output device" or "output device" refers to any device that renders an audiovisual signal or data stream perceptible, visually or aurally, to a human user. Consequently, output devices include, but are not limited to, speakers, headphones, earpieces, display devices, LCDs, video monitors, televisions, cathode ray tubes, etc.

One problem that may arise with use of the digital data network (123) is that users may wish to connect an analog audiovisual signal source to the network. This analog audiovisual signal source could be, for example, a televisiontuner, an analog radiotuner, a cassette tape player, a video cassette recorder (VCR), a game or gaming system (e.g., Nintendo™, Sega Genesis™, Sony PlayStation™), an electronic camera, a portable DVD player, etc. Analog audiovisual signals from such signal sources cannot be fed directly to the digital network, particularly an optical digital network (123), such as that preferred under the principles of the present invention and illustrated in Fig. 1. Consequently, there is a need for a means and method of interfacing analog audiovisual signal sources with a digital data network, particularly a fiber optic data network.

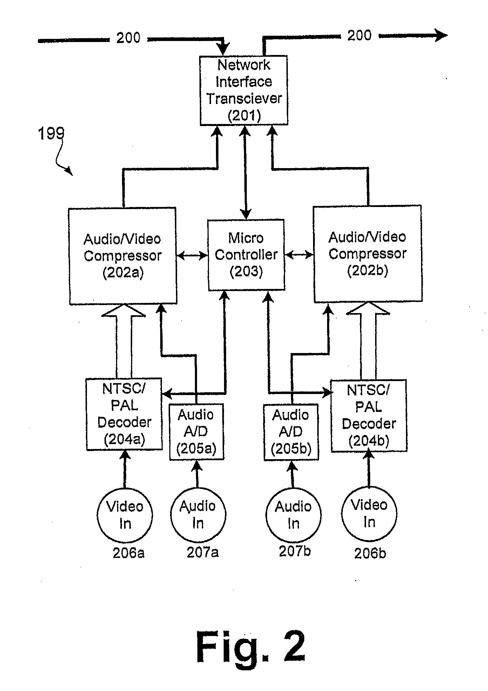

Fig. 2 illustrates a system (199) according to the principles of the present invention for interfacing one or two analog signal sources to a digital data network, preferably a fiber optic network. As shown in Fig. 2, the interface (199) has a "video in" jack (206a) paired with an "audio in" jack (207a).

A second set of video and audio inputs (206b, 207b) are also provided so that the system (199) of Fig. 2 can be used to interface two separate analog audiovisual signal sources to the digital data network (200). Being able to use the interface (199) to connect two different audiovisual signal sources to the digital data network (200) is an obvious advantage to users who may have more than one analog audiovisual device that they wish to use simultaneously over the digital data network (200). It will be understood by those skilled in the art that any number of paired video and audio inputs (206, 207) could be integrated into the interface (199) of Fig. 2 under the principles of the present invention (within the bandwidth limitations inherent in the processing circuits and optical fiber network).

Each of the video inputs (206) feeds an incoming analog video signal from the connected analog audiovisual signal source to a corresponding video decoder (204). The most common encoding formats for analog video signals are NTSC and PAL. NTSC (National Television Standards Committee) is the standard used in the United States for encoding analog television signals. PAL and SECAM are corresponding standards used in other parts of the world. PAL is the dominant encoding format in Europe.

Consequently, the decoders (204) may be designed to decode only that standard prevalent in the part of the world where the interface (199) will be used. Alternatively, the decoders (204) may be designed to decode two or more of the principal encoding formats. In Fig. 2, the decoders (204) illustrated will preferably decode either NTSC or PAL analog video signals. The decoders (204) also digitize each respective incoming analog video signal.

The analog audio signals coming through the audio inputs (207) are fed to respective analog-to-digital converters (205). These converters (205) digitize the incoming audio signals.

The decoded, digitized video signals from the decoders (204a, 204b) and the digitized audio signals from the converters (205a, 205b) are fed to respective audio/video compressors (202a, 202b). These compressors (202) compress and combine the audio and visual data streams to produce acompressed, combined audiovisual digital data stream. Preferably, the compressors (202) use the MPEG-1 or other MPEG compression format. However, any compression scheme would be within the scope of the present invention.

The compressors (202) are controlled by a micro-controller (203) that also controls a network interface transceiver (201). As indicated, the compressors (202) receive the decoded video signals from the decoders (204) and the digitized audio signals from the A/D converters (205). The compressors (202) then output a corresponding compressed digital audiovisual data stream to the network interface transceiver (201).

Where the network (200) is an optical data network, e.g., a fiber optic network, the network transceiver (201) takes the compressed digital data stream from the compressors and, under control of the micro-controller (203), converts the audiovisual data streams into optical data streams for transmission over the network (200). In this way, the analog audio and video signals from analog sources are converted to a form that can be transmitted to output devices over the network (200). The transceiver (201) may also packetize the data for transmission on the network so that several data streams can be carried simultaneously in different packet series. Consequently, multiple analog audiovisual signal sources are successfully interfaced with the digital data network (200).

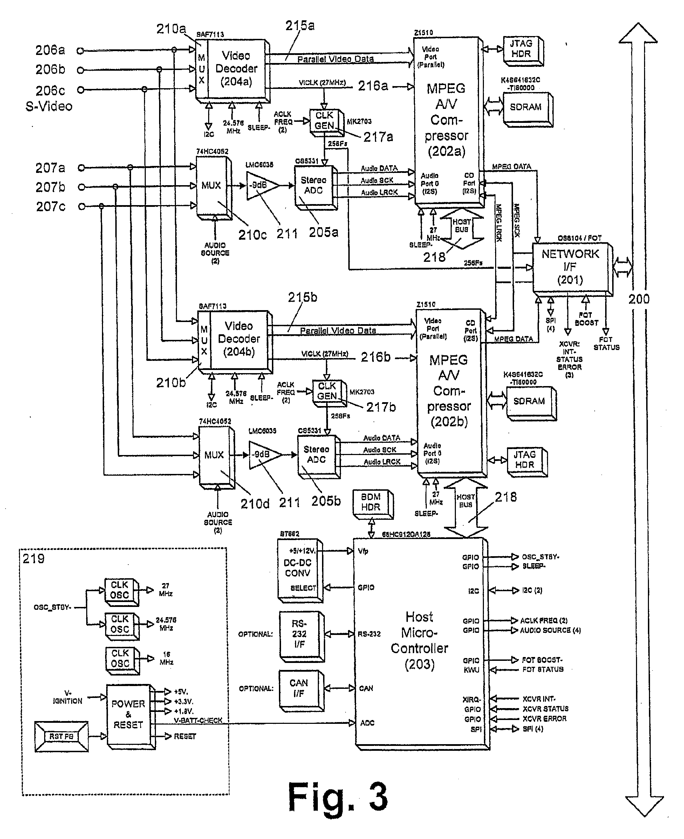

Fig. 3 is a more detailed illustration of the interface illustrated in Fig. 2 and with the addition of further features. As shown in Fig. 3, the same two video inputs (206a, 206b) are again provided. However, a third video input (206c) may also be provided. Video input (206c) is preferably an S-video input port so that an S-video device can optionally be interfaced with the network (200) as well.

The two video decoders (204a, 204b) are also provided. However, in the embodiment of Fig. 3, for more flexible signal routing, each of the three video inputs (206) is connected to both of the decoders (204a, 204b). The video inputs (206) are connected to the two decoders through two respective multiplexers (210a, 210b). Consequently, the first multiplexer (210a) can control which of the three video inputs (206) is received by the first video decoder (204a). Similarly, the second multiplexer (210b) can control which of the three video inputs (206) is received by the second video decoder (204b).

Each of the two decoders (204a, 204b) outputs decoded video data on a parallel video data bus (215a, 215b). Each decoder (204a, 204b) also outputs a clock control signal (216a, 216b) as it decodes the incoming video signal. This clock control signal (216) is fed to a clock signal generator (217a, 217b) that generates a clock signal used to correlate the processing of the associated audio signal with the processing of the video signal.

In each of the two video signal processing channels, the output of the decoder (204) is provided on the respective parallel video bus (215) to a compressor (202a, 202b). As before, the compressors (202) are preferably MPEG compressors that compress the video signals and associated audio signals according to the MPEG format, preferably the MPEG-1 format.

In addition to the three video inputs (206), there are three corresponding audio signal inputs (207a, 207b, 207c). These three inputs are all connected to two separate audio processing channels that correspond to the two video processing channels described above.

Each of the three audio inputs (207) is connected to two multiplexers (210c, 210d). The first multiplexer (210c) controls which of the three audio input signals is fed, through an amplifier (211), to a first analog-to-digital converter (205a). The A/D converter (205a) converts the incoming audio signal to a digital signal in accordance with a clock signal received from the clock generator (217a). Use of the clock signal coordinates the processed audio signal with the related video signal.

The second multiplexer (210d) controls which of the three audio input signals is fed, through an amplifier (211), to a second analog-to-digital converter (205b). The A/D converter (205b) converts the incoming audio signal to a digital signal in accordance with a clock signal received from a second clock generator (217b). Again, use of the clock signal coordinates the processed audio signal with the related video signal.

The converted digital audio signals from the converters (205a, 205b) are then fed to the respective compressors (202). The first compressor (202a), receiving a decoded, digitized video signal on the parallel video bus (215a) and the digitized audio signal from the first A/D converter (205a), generates a compressed audiovisual digital data stream (MPEG DATA) which is fed to the network interface (201) for transmission on the digital data network (200), preferably a fiber optic network. Similarly, the second compressor (202b), receiving the decoded, digitized video signal on the second parallel video bus (215b) and the digitized audio signal from the second A/D converter (205b), generates a compressed audiovisual digital data stream (MPEG DATA) which is fed to the network interface (201) for transmission on the digital data network (200).

As before, the two compressors (202a, 202b) are controlled by a micro-controller (203). A control bus (218) is provided for communication between the host micro-controller (203) and each of the two compressors (202a, 202b). A clock and power circuit (219) provides power and clock signals for the various components of the interface as illustrated in Fig. 3.

As will be understood by those skilled in the art, both signal channels (a, b) may be used simultaneously. Alternatively, only one of the two channels may be in use at any particular time. And, additional signal processing channels for interfacing a greater number of analog devices with the network (200) could be added to the interface of Fig. 3 within the scope of the present invention. In any event, the interface of Fig. 3 provides an interface for multiple analog audiovisual signal sources with the digital data network (200).

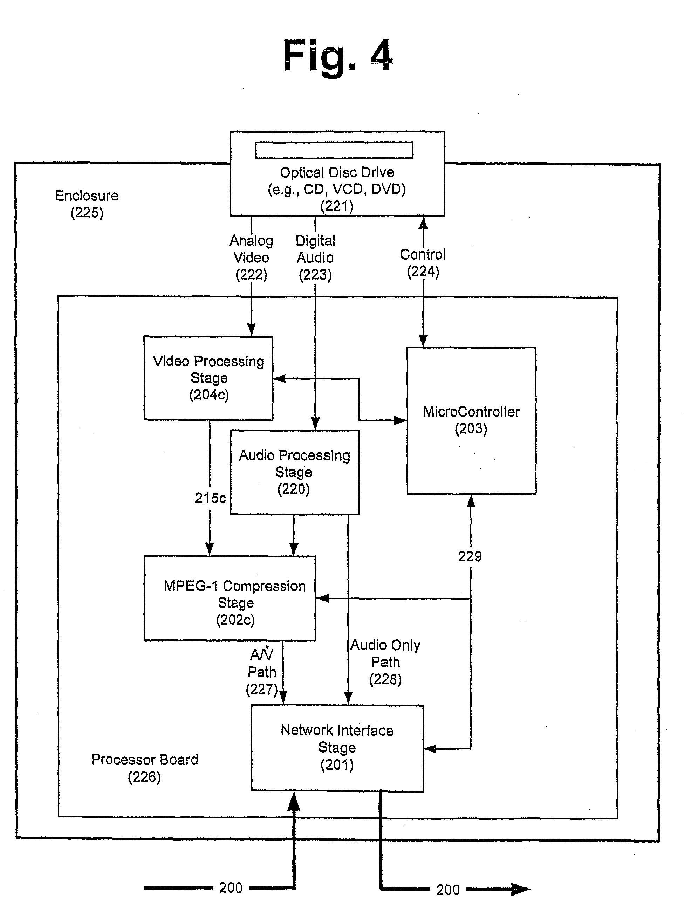

Fig. 4 illustrates a particular application of the interface system of the present invention. As shown in Fig. 4, the interface of the present invention can be used to interface an optical disc reader or drive (221) with a digital data network while supporting copyright protection measures.

There are several different kinds of optical discs, e.g., DVDs, CD-ROMs, audio CDs and Video CDs (VCDs). Accordingly, the optical disc drive (221) can be a DVD player, CD-ROM drive, Audio CD player or Video CD (VCD) drive. However, the optical disc drive (221) preferably reads two or more, or all, of the various types of optical discs available.

The optical disc drive (221) may output an analog video signal (222) and a digital audio signal (223) when working with an audiovisual disc, e.g., a DVD, VCD, etc. Alternatively, the drive (221) may be producing only a digital audio signal if the optical disc being used is, for example, an audio CD.

Where a video signal is produced, the video signal (222) is an analog signal. The analog video from the optical drive supports commonly used copyright protection measures. In addition, the encoded video also complies with copyright protection schemes consistent with its MPEG format. Portable DVD players generally output analog signals for use with an analog video display device or monitor. Thus, even though the video data is stored digitally on the optical disc, the output may be an analog video signal.

Consequently, the optical disc drive (221) is treated as an analog signal source under the principles of the present invention. The analog video signal (222) is fed to a video processing stage, e.g., a decoder, (204c) that processes, decodes and digitizes the video signal (222). The resulting digital video signal (215c) is output to a compressor or compression stage (202c).

The digital audio signal (223) is processed through an audio processing stage (220) and then also provided to the compression stage (202c). The compression stage or compressor (202c) combines and compresses the digital video signal and the digital audio signal into a single, compressed audiovisual data stream (227). Again, the compression stage (202c) preferably uses MPEG-1 compression.

The audiovisual data stream (227) is output to the network interface stage or transceiver (201). The network interface (201) will output the compressed audiovisual data stream on the digital data network (200). If the network is, as is preferred, a fiber optic network, the network interface (201) will convert the audiovisual data stream into an optical data stream. The interface (201) may also packetize the data stream so that multiple data streams can be carried simultaneously on the network in different packet series.

If the optical disc drive (221) is playing an audio CD or otherwise producing only an audio signal (223), the compression stage (202c) may be deactivated. The audio signal is then processed by the processing stage (220) and output directly (228) to the network interface (201).

The user can also use the network (200) to control the optical disc drive (221), e.g., to reverse, fast forward, initiate, stop or pause the playback of the optical disc in the drive (221). Operating a user interface (not shown) that is connected to the network (200), the user can transmit control signals for the optical disc drive (221) over the network (200). The user interface could.be, for example, a touch screen, a keypad with a display, etc.

The user's commands are taken from the network (200) by the network interface (201) and provided to the micro-controller (203) that controls the interface of Fig. 4. The micro-controller (203), in turn, sends a control signal (224) to the optical disc drive (221) conveying the user's command. The drive (221) then responds accordingly. Consequently, the optical disc drive (221) may be in a secure location, for example, the trunk of the vehicle in which the network (200) is installed. However, the user still has full access to and control over the drive (221) via the network (200).

The micro-controller (203) also controls the network interface stage (201) and the compression stage (202c) with a control signal (229). For example, if the compression stage (202c) is to be deactivated during playback of an audio CD, the micro-controller (203) can signal the deactivation of the compression stage (202c).

Preferably, the video processing stage (204c), audio processing stage (220), compression stage (202), network interface (201) and micro-controller (203) are integrated on a single processor board (226). Preferably, the processor board (226) and the optical drive (221) are housed in a common enclosure (225) for the convenience of the user. The unit is then connected to the network (200) through the network interface (201).

Given the interface of Fig. 4, an optical disc drive that outputs an analog audiovisual or audio signal can be successfully interfaced with the digital data network. As will be appreciated by those skilled in the art, the optical disc drive (221) may contain more than a single optical disc at a time. For example, the disc drive (221) may be a disc changer containing a magazine or tray that holds multiple optical discs.

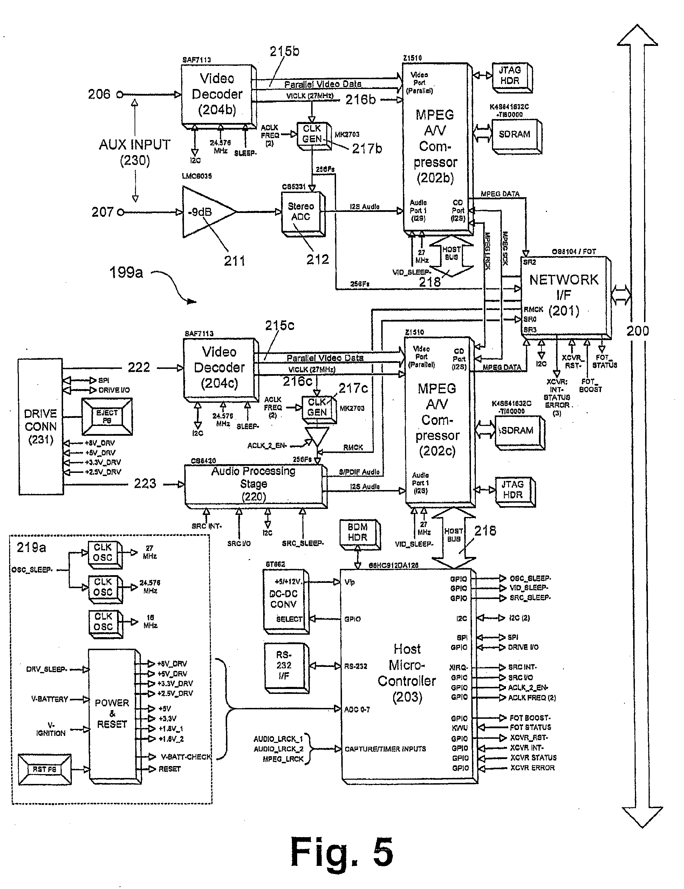

Fig. 5 illustrates in more detail the optical drive interface of Fig. 4 in combination with an auxiliary input for another analog audiovisual signal source. As shown in Fig. 5, the interface (199a) includes a connector (231) for physical connection to an optical disc drive (not shown). This connector (231) provides receipt of the analog video signal (222) and the digital audio signal (223), as well as communication of the control signals (SPI, DRIVE I/O) from the network (200) for the optical disc drive.

As before, the analog video signal (222) is provided to a video processing stage or decoder (204c). The digitized decoded video is output on a parallel video bus (215c) to a compressor (202c). The video decoder (204c) also outputs a clock control signal (216c) to a clock generator (217c). The clock generator (217c), in turn, outputs a clock signal that is used by the audio processing stage (220) to coordinate the related video and audio signals being processed.

The digital audio signal (223) is processed by the audio processing stage (220). As before, the digital audio and video signals are provided to a compressor (202c). The compressor (202c), preferably an MPEG-1 compressor, takes the digital video and audio signals and compresses them into a single audiovisual data stream.

The audiovisual data stream (MPEG DATA) is output to the network interface stage or transceiver (201). The network interface (201) will output the compressed audiovisual data stream on the digital data network (200). If the network is, as is preferred, a fiber optic network, the network interface (201) will convert the audiovisual data stream (MPEG DATA) into an optical data stream. The interface (201) may also packetize the data stream so that multiple data streams can be carried simultaneously on the network in different packet series.

As before, a micro-controller (203) controls the compressor (202c). A host bus (218) carries control signals from the controller (203) to the compressor (202c). The controller (203) also sends user control signals (SPI, DRIVE I/O) received via the network (200) and network interface (201) to the optical disc drive through the connector (231).

The interface (199a), in addition to the channel described above for interfacing the optical disc drive to the network (200), incorporates an auxiliary interface channel for any other analog audiovisual source. This interface channel is substantially like either of the two interface channels described in connection with Fig. 3.

The auxiliary channel has an auxiliary input (230) consisting of a video input (206) and an audio input (207). As before, the video input (206) feeds an analog video signal to a video decoder (204b). The decoder (204b) decodes and digitizes the analog video signal.

The decoder (204b) then outputs the decoded, digitized video data on a parallel video data bus (215b). The decoder (204b) also outputs a clock control signal (216b) as it decodes the incoming video signal. This clock control signal (216b) is fed to a clock signal generator (217b) that generates a clock signal. The clock signal is input to a stereo analog-to-digital converter (212) to correlate the processing of the associated audio signal with the processing of the video signal.

The output of the decoder (204b) is provided on the parallel video bus (215b) to a compressor (202b). As before, the compressor (202b) is preferably an MPEG compressor that compresses the video signals and associated audio signals according to the MPEG format.

The auxiliary audio input (207) is connected through an amplifier (211) to the stereo analog-to-digital converter (212). The A/D converter (212) converts the incoming audio signal to a digital signal in accordance with the clock signal received from the clock generator (217b).

The converted digital audio signal from the A/D converter (212) is then fed to the compressor (202b). The compressor (202b), receiving the decoded, digitized video signal on the parallel video bus (215b) and the digitized audio signal from the stereo A/D converter (212), generates a compressed audiovisual digital data stream (MPEG DATA) which is fed to the network interface (201) for transmission on the digital data network (200).

The compressor (202b) is also controlled by the micro-controller (203). Consequently, the second compressor (202b) is also connected to the control bus (218) for communication with the host micro-controller (203). A clock and power circuit (219) provides power and clock signals for the various components of the interface (199a) as illustrated in Fig. 5.

In summary, the interface illustrated in Fig. 5 provides for the interface of an optical disc drive outputting an analog video signal and a digital audio signal with a digital data network (200), preferably an optical network. Additionally, the interface of Fig. 5 also provides an auxiliary channel for interfacing a generic analog audiovisual signal source with the network (200).

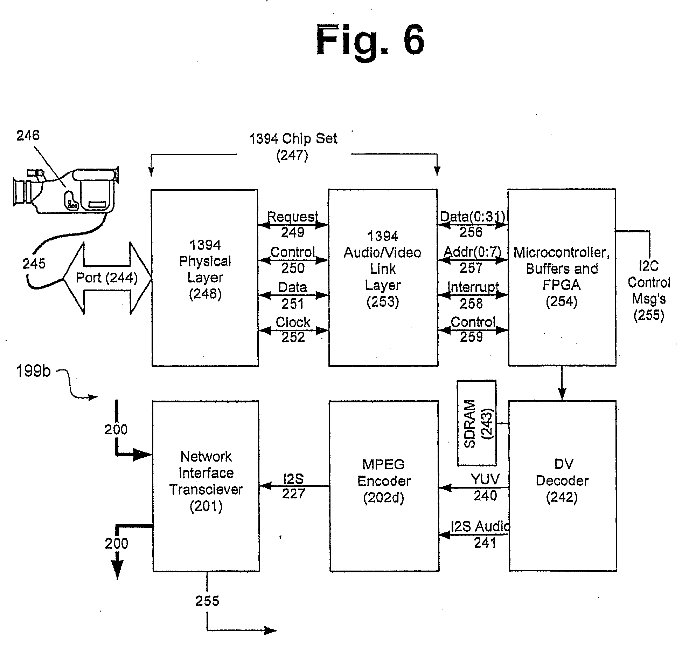

Fig. 6 illustrates another interface with the digital, preferably fiber optic, data network (200) of the present invention. The interface of Fig. 6 is for a digital video camera (246). The present inventors have recognized that users sometimes desire to output an audiovisual signal from a digital video camera (246) to the in-vehicle data network (200) for replay on the output devices connected to the network. Interfacing the output of the camera (246) and the network (200) presents some problems that can be overcome by application of the principles of the present invention.

Many digital video cameras (246) currently incorporate an IEEE 1394 port. This is a data communication port to which an external bus may be connected that supports data transfer rates of up to 400 Mbps (400 million bits per second). The specifications for the IEEE 1394 standard are promulgated by the Institute of Electrical and Electronics Engineers (the IEEE).

The present invention uses the IEEE 1394 port on the digital video camera (246) to interface the camera (246) with the network (200). An IEEE 1394 bus (245) is connected between the appropriate port on the camera (246) and an IEEE 1394 port (244) on the interface (199b).

The port (244) is supported by an IEEE 1394 chip set (247). This chip set (247) includes a physical layer (248) that provides a request signal (249), a control signal (250), a data signal (251) and a clock signal (252) to an audio/video link layer (253). The link layer (253) communicates with the circuitry of the interface (199b): a micro-controller, associated buffers and field programmable gate array (FPGA) (254). The signal set between the link layer (253) and the micro-controller (254) includes a data signal (256), an address signal (257), an interrupt signal (258) and a control signal (259).

As with the optical disc drive discussed above, the camera (246) can be controlled by the user through a user interface (not shown) connected to the network (200). A control signal (255) may be received through the network interface (201) from the network (200) and delivered to the micro-controller (254) as shown in Fig. 6. The micro-controller (254), in turn, controls the camera (246) through the control signals (250, 259) that pass through the IEEE 1394 interface (247, 244).

In this way, the camera (246) can be stowed in a secure location, for example, the trunk of the vehicle in which the network (200) is installed. The camera (246) can remain in the secure location while the user has full access to the audiovisual programming recorded on the camera. More specifically, the user can initiate, stop, pause, reverse or fast-forward the playback of the audiovisual programming stored on the camera (246) while the camera (246) is interfaced with the network (200), which also has a user interface connected thereto into which the user can input control commands for the camera (246).

The digital video signal from the camera (246) passes through the IEEE 1394 interface (247) and control circuitry (254) to a digital video decoder (242). A memory unit (243), preferably SDRAM, is connected to the decoder (242) to support the decoder's operation.

The decoder (242) decodes the video signal and outputs a YUV digital video signal (240) and a digital audio signal (241). YUV is the native signal format for digital video, in which Y is luminance, U is red minus Y, and V is blue minus Y. To display the video signal on a monitor, the YUV data must be converted to an RGB signal.

The digital video signal (240) and digital audio signal (241) are output to an encoder or compressor (202d). As before, this encoder (202d) is preferably an MPEG-1 encoder and combines and compresses the digital video signal (240) and audio signal (241) into a compressed digital audiovisual data stream (227).

The encoder (202d) is used to re-encode the audiovisual signal to a lower bit rate within the available bandwidth of the data network (200). For example, the bit rate of audiovisual data from the camera (246) may be 20 Mbps. The encoder (202) produces an audiovisual data stream of 1.4 Mbps which places much lesser demands on the digital network (200) than would direct transmission of the data stream from the camera (246).

The audiovisual data stream (227) is then output to the network interface transceiver (201). The network interface (201) will output the compressed audiovisual data stream on the digital data network (200). If the network is, as is preferred, a fiber optic network, the network interface (201) will convert the audiovisual data stream into an optical data stream. The interface (201) may also packetize the data stream so that multiple data streams can be carried simultaneously on the network in different packet series.

One advantage of the interface (199b) is that the signals are always kept in the digital domain. Consequently, picture and sound quality are not degraded.

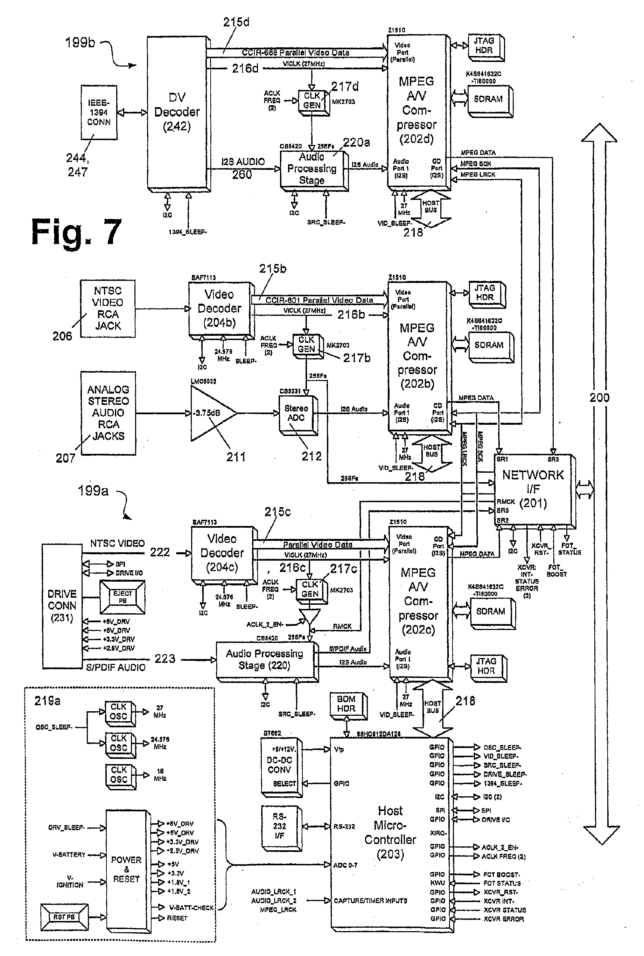

Fig. 7 illustrates the interface (199b) between a digital video camera and digital data network in more detail. The embodiment of Fig. 7 also incorporates an auxiliary input channel for another analog audiovisual signal source and an interface for an optical disc drive as described in connection with Figs. 4 and 5.

As shown in Fig. 7, the interface (199b) includes the IEEE 1394 connector (244, 247) for receiving an IEEE 1394 bus (245; Fig. 6) connected between a digital video camera (246; Fig. 6) and the interface (199b). Digital video from the camera is passed through the connector (244, 247) to a digital video (DV) decoder (242). The connection between the decoder (242) and the connector (244, 247) is bi-directional so that control signals can be sent back to the video camera as described above.

The decoder (242) outputs a decoded digital video signal on a parallel video bus (215d). The decoder (242) also outputs a digital audio signal (260). The audio signal (26) goes to an audio processing stage (220a). The decoder (242) also outputs a clock control signal (216d) to a clock signal generator (217d). The clock signal generator (217d) outputs a clock signal to the audio processing circuitry (220a) to coordinate the audio and video signals being processed.

The digital video signal (215d) and the digital audio signal (260) are input to a compressor (202d), preferably an MPEG-1 compressor. The compressor (202d) is controlled by a micro-controller (203) through a host bus (218).

The compressor (202d) combines the incoming digital video and audio signals into a single, compressed audiovisual data stream. The compressor (202d) then outputs the data stream (MPEG DATA) to the network interface (201).

The audiovisual data stream (MPEG DATA) is then output to the network (200) by the network interface (201). If the network is, as is preferred, a fiber optic network, the network interface (201) will convert the audiovisual data stream into an optical data stream. The interface (201) may also packetize the data stream so that multiple data streams can be carried simultaneously on the network in different packet series.

As shown in Fig. 7, the interface (199b) for the digital video camera may be integrated with an auxiliary input channel for another analog audiovisual signal source and/or an interface (199a) for an optical disc drive. As described above, the interface (199a) includes a connector (231) for physical connection to an optical disc drive (not shown). This connector (231) provides receipt of an analog video signal (222) and a digital audio signal (223), as well as communication of the control signals for the optical disc drive.

The analog video signal (222) is provided to a video processing stage or decoder (204c). The digitized, decoded video is output on a parallel video bus (215c) to a compressor (202c). The video decoder (204c) also outputs a clock control signal (216c) to a clock generator (217c). The clock generator (217c), in turn, outputs a clock signal that is used by the audio processing stage (220) to coordinate the video and audio signals being processed.

The digital audio signal is processed by the audio processing stage (220). As before, the digital audio and video signals are provided to the compressor (202c). The compressor (202c), preferably an MPEG-1 compressor, takes the digital video and audio signals and compresses them into a single audiovisual data stream.

The audiovisual data stream (MPEG DATA) is output to the network interface stage or transceiver (201). The network interface (201) will output the compressed audiovisual data stream on the digital data network (200). If the network is, as is preferred, a fiber optic network, the network interface (201) will convert the audiovisual data stream into an optical data stream. The interface (201) may also packetize the data stream so that multiple data streams can be carried simultaneously on the network in different packet series. Consequently, the network could be carrying audiovisual programming from both the digital video camera and the optical disc drive simultaneously.

The micro-controller (203) also controls the compressor (202c). The host bus (218) carries control signals from the controller (203) to the compressor (202c). The controller (203) also sends control signals (SPI, DRIVE I/O) to the optical disc drive through the connector (231).

In the interface (199a), in addition to the channel for interfacing the optical disc drive to the network (200), an auxiliary interface channel for any other analog audiovisual source may optionally be provided.

The auxiliary channel has an auxiliary input (230) consisting of a video input (206) and an audio stereo input (207). As before, the video input (206) feeds an analog video signal to a video decoder (204b). The decoder (204b) decodes and digitizes the analog video signal.

The decoder (204b) then outputs the decoded digital video data on a parallel video data bus (215b). The decoder (204b) also outputs a clock control signal (216b) as it decodes the incoming video signal. This clock control signal (216b) is fed to a clock signal generator (217b) that generates a clock signal used to correlate the processing of the associated audio signal with the processing of the video signal.

The output of the decoder (204b) is provided on a parallel video bus (215b) to a compressor (202b). As before, the compressor (202b) is preferably an MPEG compressor that compresses the video signals and associated audio signals according to an MPEG format.

The auxiliary audio input (207) is connected through an amplifier (211) to a stereo analog-to-digital converter (212). The A/D converter (212) converts the incoming audio signal to a digital signal in accordance with a clock signal received from the clock generator (217b).

The converted digital audio signal from the converter (212) is then fed to the compressor (202b). The compressor (202b), receiving the decoded video signal on the parallel video bus (215b) and the digitized audio signal from the stereo A/D converter (212), generates a compressed audiovisual digital data stream (MPEG DATA) that is fed to the network interface (201) for transmission on the digital data network (200).

The compressor (202b) is also controlled by the micro-controller (203). Consequently, the second compressor (202b) is also connected to the control bus (218) for communication with the host micro-controller (203). A clock and power circuit (219) provides power and clock signals for the various components of the interface (199a) as illustrated in Fig. 7.

The preceding description has been presented only to illustrate and describe the invention. It is not intended to be exhaustive or to limit the invention to any precise form disclosed. Many modifications and variations are possible in light of the above teaching.

The preferred embodiment was chosen and described in order to best explain the principles of the invention and its practical application. The preceding description is intended to enable others skilled in the art to best utilize the invention in various embodiments and with various modifications as are suited to the particular use contemplated. It is intended that the scope of the invention be defined by the following claims.

## Claims

1. An interface for connecting an analog audiovisual signal source with a digital data network, said interface comprising:
at least one paired analog audio signal input and analog video signal input;
a video decoder connected to said video signal input for decoding and digitising an incoming video signal;
an analog-to-digital converter connected to said audio signal input for digitising an incoming audio signal;
a compressor for receiving output from said video decoder and said analog-to-digital converter and combining and compressing said digitized video signal and said digitised audio signal into a single audiovisual data stream; and
a network interface for receiving output from said compressor and transmitting said audiovisual data stream on said digital data network.

2. The interface of claim 1, further comprising:
a second paired analog audio signal input and analog video signal input;
a second video decoder connected to said second video signal input for decoding and digitising a second video signal;
a second analog-to-digital converter connected to said second audio signal input for digitising a second audio signal; and
a second compressor for receiving output from said second video decoder and said second analog-to-digital converter and combining and compressing said digitised second video signal and said digitised second audio signal into a second audiovisual data stream;
wherein said network interface receives output from said first and second compressors, packetizes said first and second audiovisual data streams and transmits said first and second audiovisual data streams on said digital data network.

3. The interface of claim 2, further comprising:
an S-video input paired with a third analog audio signal input;
a first multiplexer for receiving said first, second and S-video signals and providing a selected video signal to said first video decoder; and
a second multiplexer for receiving said first, second and third audio signals and providing a selected audio signal to said first analog-to-digital converter;
a third multiplexer for receiving said first, second and S-video signals and providing a selected video signal to said second video decoder; and
a fourth multiplexer for receiving said first, second and third audio signals and providing a selected audio signal to said second analog-to-digital converter.

4. A system for reproducing and transmitting audiovisual data from an optical disc comprising:
an optical disc drive for reproducing audio or audiovisual data from an optical disc, wherein said optical disc drive outputs an analog video signal;
a digital data network for transmitting digital audiovisual data streams; and
an interface for interfacing said output of said optical disc drive with said digital data network, said interface comprising:
a video decoder connected to said output of said optical disc drive from receiving, decoding and digitising said analog video signal;
a compressor for receiving output from said video decoder and a digital audio signal from said optical disc drive, said compressor combining and compressing said digitised video signal and said audio signal into a single audiovisual data stream; and
a network interface for receiving output from said compressor and transmitting said audiovisual data stream on said digital data network.

5. The system of claim 4, wherein said optical disc drive and said interface are enclosed in a common enclosure.

6. The system of claim 4 or 5, further comprising:
at least one paired analog audio signal input and analog video signal input;
a second video decoder connected to said video signal input for decoding and digitising a second incoming video signal;
an analog-to-digital converter connected to said audio signal input for digitizing a second incoming audio signal; and
a second compressor for receiving output from said video decoder and said analog-to-digital converter and combining and compressing said digitised second video signal and said digitised second audio signal into a second audiovisual data stream;
wherein said network interface receives said second audiovisual data stream for transmission on said digital data network; and
wherein said network interface packetizes said first and second audiovisual data streams and transmits said first and second audiovisual data streams on said digital data network.

7. A system for transmitting audiovisual data from a digital video camera comprising:
an IEEE 1394 port for receiving an IEEE 1394 bus connected to a digital video camera such that a digital audiovisual signal transmitted via said bus from said camera is received through said port;
a digital data network for transmitting digital audiovisual data streams; and
an interface for interfacing said IEEE 1394 port with said digital data network, said interface comprising:
a video decoder connected to said IEEE 1394 port for receiving and decoding said digital audiovisual signal;
a compressor for receiving output from said video decoder, said compressor compressing said audiovisual signal to produce a compressed audiovisual data stream; and
a network interface for receiving output from said compressor and transmitting said audiovisual data stream on said digital data network.

8. The system of claim 7, further comprising a micro-controller for receiving user commands for said digital video camera via said data network and controlling said digital video camera in accordance with said user commands.

9. The system of claim 7, further comprising:
at least one paired analog audio signal input and analog video signal input;
a second video decoder connected to said video signal input for decoding and digitising a second incoming video signal;
an analog-to-digital converter connected to said audio signal input for digitising a second incoming audio signal; and
a second compressor for receiving output from said second video decoder and said analog-to-digital converter and compressing and combining said digitised second video signal and said digitised second audio signal into a second audiovisual data stream for transmission on said digital data network; and
wherein said network interface packetizes said first and second audiovisual data streams and transmit said first and second audiovisual data streams on said digital data network.

10. A digital data distribution system comprising an interface in accordance with any one of claims 1 to 3, or a system in accordance with any one of claims 4 to 9, wherein said digital data network is a fibre-optic network, and said network interface converts said audiovisual data stream into an optical data stream before transmitting said optical data stream on said digital data network.

11. A digital data distribution system comprising an interface in accordance with any one of claims 1 to 3, or a system in accordance with any one of claims 4 to 10, wherein said digital data network is installed in a vehicle.

12. A digital data distribution system comprising an interface in accordance with any one of claims 1 to 3, or a system in accordance with any one of claims 4 to 11, wherein the or each said compressor uses an MPEG compressing standard.

13. The system of claim 7, further comprising:
an optical disc drive for reproducing audio or audiovisual data from an optical disc, wherein said optical disc drive outputs an analog video signal; and
an interface for interfacing said output of said optical disc drive with said digital data network, said interface comprising:
a second video decoder connected to said output of said optical disc drive for receiving, decoding and digitizing said analog video signal; and
a second compressor for receiving output from said second video decoder and a digital audio signal from said optical disc drive, said second compressor compressing and combining said digitized video signal and said audio signal into a second audiovisual data stream; and
wherein said network interface receives said second audiovisual data stream for transmission on said digital data network; and
wherein said network interface packetizes said first and second audiovisual data streams and transmits said first and second audiovisual data streams on said digital data network.

14. The system of claim 13, further comprising:
at least one paired analog audio signal input and analog video signal input;
a third video decoder connected to said video signal input for decoding and digitizing a third incoming video signal;
an analog-to-digital converter connected to said audio signal input for digitising a third incoming audio signal; and
a third compressor for receiving output from said third video decoder and said analog-to-digital converter and compressing and combining said digitised third video signal and said third audio signal into a third audiovisual data stream;
wherein said network interface receives said third audiovisual data stream for transmission on said digital data network; and
wherein said network interface packetizes said first, second and third audiovisual data streams and transmits said first, second and third audiovisual data streams on said digital data network.

15. A method of interfacing an analog audiovisual signal source with a digital data network, said method comprising:
decoding and digitising an incoming analog video signal;
digitising an incoming analog audio signal;
combining and compressing said digitised video signal and said digitised audio signal into a single audiovisual data stream; and
transmitting said audio visual data stream on said digital data network.

16. The method of claim 15, further comprising connecting at least one audiovisual output device to said data network for receiving and outputting said audiovisual data stream.

17. The method of claim 16, wherein said connecting of at least one audiovisual output device to said data network is performed in a vehicle in which said data network is installed.

18. The method of any one of claims 15 to 17, further comprising:
receiving a second paired analog audio signal and analog video signal;
decoding and digitising said second video signal;
digitising said second audio signal;
combining and compressing said digitised second video signal and said digitised second audio signal into a second audiovisual data stream;
packetizing said first and second audiovisual data streams; and
transmitting said first and second audiovisual data streams on said digital data network.

19. The method of claim 18, further comprising:
with a multiplexer, providing a selected incoming video signal to a first video decoder;
with a second multiplexer, providing a selected audio signal to a first analog-to-digital converter;
with a third multiplexer, providing a selected incoming video signal to a second video decoder; and
with a fourth multiplexer, providing a selected audio signal to a second analog-to-digital converter.

20. A method of reproducing and transmitting audiovisual data from an optical disc comprising:
reproducing audio or audiovisual data from an optical disc with an optical disc drive, wherein said optical disc drive outputs an analog video signal and a digital audio signal;
decoding and digitising said analog video signal;
combining and compressing said decoded, digitised video signal and said digital audio signal to form a single audiovisual data stream; and
transmitting said audiovisual data stream on a digital data network.

21. The method of claim 20, further comprising remotely controlling said optical disc drive by entering user commands which are transmitted to said optical disc drive via said network.

22. The method of claim 20 or 21, further comprising:
receiving an analog audio signal and an analog video signal from an analog signal source other than said optical disc drive;
decoding and digitising said second incoming video signal;
digitising said second incoming audio signal;
combining and compressing said digitised second video signal and digitised second audio signal into a second audiovisual data stream;
packetizing said first and second audiovisual data streams; and
transmitting said first and second audiovisual data streams on said digital data network.

23. A method of transmitting audiovisual data from a digital video camera comprising:
connecting an IEEE 1394 bus between said digital video camera and an IEEE 1394 port of an interface unit such that a digital audiovisual signal transmitted via said bus from said camera is received through said port;
decoding said digital audiovisual signal; and
re-encoding said audiovisual signal at a lower bit rate to produce an encoded audiovisual data stream; and
transmitting said audiovisual data stream over a digital data network.

24. The method of claim 23, further remotely controlling said video camera by transmitting user commands to said video camera via said digital data network.

25. The method of any one of claims 15 to 24, further comprising converting said audiovisual data stream into an optical data stream before transmitting said optical data stream on said digital data network; wherein said digital data network is a fibre-optic network.

26. The method of any one of claims 15 to 25, further comprising installing said digital data network in a vehicle.

27. The method of any one of claims 15 to 26, wherein said compression or said re-encoding is performed using an MPEG encoding standard.

28. A system for interfacing an analog audiovisual signal source with a digital data network, said system comprising:
means for decoding and digitizing an incoming analog video signal;
means for digitising an incoming analog audio signal;
means for combining and compressing said digitised video signal and said digitised audio signal into a single audiovisual data stream; and
means for transmitting said audiovisual data stream on said digital data network.

29. A system for reproducing and transmitting audiovisual data from an optical disc comprising:
means for reproducing audio or audiovisual data from an optical disc to produce an analog video signal and a digital audio signal;
means for decoding and digitising said analog video signal;
means for combining and compressing said decoded, digitised video signal and said digital audio signal to form a single audiovisual data stream; and
means for transmitting said audiovisual data stream on a digital data network.

30. A system for transmitting audiovisual data from a digital video camera comprising:
an IEEE 1394 bus for connection between said digital video camera and an IEEE 1394 port of an interface unit such that a digital audiovisual signal transmitted via said bus from said camera is received through said port;
means for decoding said digital audiovisual signal; and
means for re-encoding said audiovisual signal at a lower bit rate to produce an encoded audiovisual data stream; and
means for transmitting said audiovisual data stream over a digital data network.

31. The system of any one of claims 28 to 30, wherein said network is a fibre-optic network.

32. The system of any one of claims 28 to 31, wherein said network is installed in a vehicle.
